# EUROPÄISCHE PATENTSCHRIFT

(11) **EP 0 468 362 B1**
(45) Veröffentlichungstag und Bekanntmachung des Hinweises auf die Patenterteilung: **12.01.1994**
(21) Anmeldenummer: 91111999.8
(22) Anmeldetag: 18.07.1991
(51) Int. Cl.: A01D 34/70

(54) **Vorrichtung zum seitlichen Anschliessen eines Sammelbehälters an ein Fahrzeug**
Device to mount a collecting box on the side of a tractor
Dispositif pour fixer un collecteur sur le côté d'un véhicule

(30) Priorität: 27.07.1990 US 559231
(43) Veröffentlichungstag der Anmeldung: 29.01.1992
(73) Patentinhaber: DEERE & COMPANY, Moline, Illinois 61265 (US)
(72) Erfinder: Tesch, Roger Howard, Beaver Dam, Wisconsin 53916 (US); Del Ponte, Denis James, Beaver Dam, Wisconsin 53916 (US)
(74) Vertreter: Feldmann, Bernhard

(56) Entgegenhaltungen:
- US-A- 3 527 037
- US-A- 4 156 337
- US-A- 4 579 363
- US-A- 4 699 393
- US-A- 4 700 534
- US-A- 4 709 541
- US-A- 4 899 525

## Beschreibung

Die Erfindung bezieht sich auf eine Kombination aus einem Fahrzeug, einem Sammelbehälter, insbesondere für Gras oder dergleichen, und einer Vorrichtung zum seitlichen Anschließen des sich auf dem Boden abstützenden Sammelbehälters an das mit einem Mähwerk sowie mit mindestens einem vorderen und mindestens einem rückwärtigen Laufrad ausgerüstete Fahrzeug über eine am Fahrzeug angeschlossene Tragwelle, wobei die Anschlußvorrichtung vertikale Schwenkbewegungen des Sammelbehälters gegenüber dem Fahrzeug zuläßt wie sie aus der US-A-3 527 037 bekannt ist.

Kompakttraktore für die Rasenpflege sind mit einem Mähwerk zwischen ihren Achsen oder mit einem Frontmähwerk ausgerüstet, von dem das geschnittene oder aufgesammelte Gut in einen Sammelbehälter bzw. Grasfangbehälter gefördert werden kann. Grasfangbehälter sind in der Regel rückwärtig am Traktor angeschlossen und das Gut wird über ein je nach dem Förderweg größeres oder kleineres Gebläse in den Behälter gefördert (US-A-4 700 534). Bei einem rückwärtigen Anbau bleiben die Traktoren leicht manövrierfähig und die Breite und die Länge über alles wird nicht wesentlich vergrößert. Bei einem entsprechenden Fassungsvermögen jedoch sind solche Sammelbehälter so hochstehend angeordnet, daß sie beim Rückwärtsfahren die Sicht versperren und den Schwerpunkt in die Höhe verlagern, was beides aus Sicherheitsgründen unerwünscht ist.

Bei als Anhänger ausgebildeten Sammelbehältern (US-A-4 579 363) wird zwar die Schwerpunktslage des ziehenden Fahrzeuges nicht oder nur kaum beeinträchtigt, jedoch vergrößert der Anhänger die Gesamtlänge und das Manövrieren erfordert geübte Bedienungspersonen.

Seitlich fest angebaute Sammelbehälter sind ebenfalls bekannt (US-A-4 069 649). Bei diesen ist der Abstand des Mähwerks zum Behälter kleiner und damit der Förderweg für das geschnittene Gut. Bei solchen Anordnungen kann gegebenfalls auf ein Fördergebläse verzichtet werden. Der Seitenanbau verschiebt jedoch den Schwerpunkt seitlich, und bei Arbeiten am Hang ist eine Kippgefahr nicht auszuschließen.

Bei einer weiteren bekannten Vorrichtung, (Broschüre mit dem Titel "Ransomes Bob-Cat Gc-T16K Vac" herausgegeben von Ransomes, Inc., USA im Jahre 1986) stützt sich der Sammelbehälter auf einem Bodenrad ab, das sich auf gleicher Höhe wie ein Vorderrad des den Behälter über einen Rahmen aufnehmenden Kompakttraktors befindet. Das rückwärtige Ende des Sammelbehälterrahmens ist über eine Querstrebe mit dem rückwärtigen Teil des Traktors verbunden. Der Sammelbehälter ist um eine rückwärtige quer verlaufende untere Achse zum Entleeren kippbar, wobei sich eine rüchwärtige Tür öffnet. Beim Verkippen muß eine Verbindung mit dem Mähwerk, wie ein Förderrohr gelöst werden. Im übrigen macht der Behälterrahmen alle Bewegungen des Traktors mit. Hinzu kommt, daß beim Befüllen des Sammelbehälters das Gut sich vom rückwärtigen Ende aus nach vorne aufbaut, was sich nachteilig auf die Stabilität des Traktors, insbesondere bei Hangfahrten, auswirken kann.

Bei der Vorrichtung, von der die Erfindung ausgeht (US-A-3 527 037), ist die Tragwelle am rückwärtigen Ende des Fahrzeuges vorgesehen, und der Sammelbehälter ist über eine einzige Kufe auf dem Boden geführt. Der Sammelbehälter kann zumindest im leeren Zustand um die quer verlaufende Tragwelle vertikal verschwenken, wobei sein frontseitiges Ende auf und ab bewegt wird, wenn es auf Bodenunebenheiten trifft. Damit aber dann der Einlaß des Sammelbehälters in etwa zu der Auswurföffnung des Mähers ausgerichtet bleibt, ist noch das frontseitige Ende des Sammelbehälters über eine Kette mit dem Mähwerk verbunden. Eine Anordnung des Sammelbehälters auf einer einzigen Kufe ist natürlich nicht von Vorteil, was ebenfalls für die Plazierung der Tragwelle am rückwärtigen Fahrzeugende gilt. Für die Befestigung der Tragwelle müssen am Fahrzeug besondere Vorkehrungen getroffen werden, die beim Einsatz des Fahrzeuges ohne Mähwerk hinderlich sein können.

Die mit der Erfindung zu lösende Aufgabe wird in einem leicht anschließbaren und zugänglichen Sammelbehälter gesehen, dessen Gewicht die Schwerpunktslage des Fahrzeuges nicht oder nur unwesentlich beeinträchtigt. Diese Aufgabe ist nach der Erfindung dadurch gelöst worden,daß der Sammelbehälter sich auf mindestens einem Bodenrad abstützt und die Tragwelle an dem dem Bodenrad abgelegenen Ende des Sammelbehälters mit einem der Laufräder des Fahrzeuges verbunden ist. Auf diese Weise kann der Sammelbehälter ohne großen Kraftaufwand von den Fahrzeug mitgeführt werden und auch im vollständig befüllten Zustand um seine Tragwelle auf- und abschwenken, wenn sein Bodenrad auf Bodenunebenheiten auftrifft. Hinzu kommt, daß die Tragwelle in einfacher Weise an ein bereits vorhandenes Fahrzeugteil angeschlossen werden kann, beispielsweise über die Radmuttern.

Bei seitlich an Kompakttraktoren anschließbaren Sammelbehältern ist gewöhnlich das Mähwerk vor dem Traktor angebaut und die vorderen Laufräder sind antreibbar und nicht lenkbar. Das Fahrzeug wird dann über ein oder zwei rückwärtige Laufräder gelenkt, weshalb nach der Erfindung ferner vorgesehen werden kann, daß dann das Bodenrad im Bereich des rückwärtigen Endes des Sammelbehälters vorgesehen und die Tragwelle mit einem der vorderen Laufräder des Fahrzeuges verbunden ist. Hierdurch wird eine sehr gute Gewichtsverteilung erreicht, und die Manövrierfähigkeit des Traktors bleibt voll erhalten. Die Schwerpunktslage des Traktors wird nicht oder nur unwesentlich geändert.

Wenn das Mähwerk frontseitig am Fahrzeug angebaut ist und zumindest an einer Seite über die Fahrzeugbreite übersteht, wird nach der Erfindung außerdem vorgeschlagen, daß der Sammelbehälter derart mit dem Fahrzeug seitlich verbunden ist, daß er mit seiner Außenseite innerhalb der Arbeitsbreite des Mähwerks liegt, so daß die Breite über alles durch den seitlich angeschlossenen Sammelbehälter nicht verändert wird.

Bei seitlich angeschlossenen Sammelbehältern wird es erfindungsgemäß als besonders zweckmäßig angesehen, daß der Boden des Sammelbehälters von seiner dem Fahrzeug zugelegenen inneren Seitenwand sich schräg nach außen und unten erstreckt und die äußere Seitenwand als sich nach oben öffnende Klappe ausgebildet ist. Beim Öffnen der Klappe rutscht dann das sich im Sammelbehälter befindliche Gut einfach auf den Boden. Der Sammelbehälter braucht nicht gekippt zu werden. Verbindungsrohre zu dem Mähwerk brauchen zum Entleeren nicht gelöst zu werden, da sich beim Entleeren die Lage des Sammelbehälters mit Bezug auf das Mähwerk nicht ändert.

Zum Anschluß der Tragwelle an das Fahrzeug sieht die Erfindung ferner vor, daß mit der Nabe eines der vorderen Laufräder des Fahrzeuges ein Anschlußteil mit einem Rohrfortsatz verbindbar ist, in den die Tragwelle drehfest einsteckbar und sicherbar ist. Dabei kann der Anschlußteil einfach auf die Radschrauben aufgesteckt und mit den Radmuttern befestigt werden, wobei der Rohrfortsatz eine innere Keilverzahnung und die Tragwelle eine äußere Keilverzahnung zur drehfesten Verbindung aufweisen können. Im Einsatz dreht sich dann die Tragwelle mit dem Treibrad mit. Soll ohne den Sammelbehälter gearbeitet werden, kann die Tragwelle leicht abgezogen werden. Sie kann aber auch am Fahrzeug verbleiben, insbesondere wenn ein Versteifungsholm mit seinem rückwärtigen Ende mit dem Fahrzeug verbunden ist und an seinem vorderen Ende eine auf der Tragwelle gelagerte Hülse aufweist. Die Hülse dreht sich beim Einsatz nicht mit, so daß auch keine Gefährdung Dritter durch nicht geschützte sich drehende Teile entsteht. Der Versteifungsholm hilft mit, die Lage der Tragwelle zu stabilisieren.

Im einzelnen kann der Sammelbehälter auf einem Tragrahmen angeordnet sein, dessen vorderes Ende einen mit der Hülse lösbar verbundenen und auf der Hülse drehbar angeordneten Bügelteil aufweist. Über den Bügelteil stützt sich dann der Sammelbehälter als einziges Teil auf dem Fahrzeug an einer Stelle ab, die weit nach vorne verlegt ist. Befindet sich dann noch das Bodenrad des Sammelbehälters, das zweckmäßig als Pendelrad ausgebildet ist, hinter dem Sammelbehälter, so wird ein besonders stabiler Anschluß erzielt. Zum Lösen des Sammelbehälters braucht nur der Verschluß des Bügelteils gelöst zu werden und der Sammelbehälter kann auf seinem Bodenrad nach rückwärts von dem Fahrzeug fortgeschoben werden. Der Bügelteil kann als offene Öse ausgebildet sein, die auf der Hülse über Schrauben sicherbar ist.

Vorteilhaft kann noch eine Puffereinrichtung zwischen dem Fahrzeug und dem Sammelbehälter derart gekuppelt sein, daß die Höhenverschwenkung und/oder seitliche Ausweichbewegungen des Sammelbehälters begrenzt sind, was von Bedeutung sein kann, wenn der Sammelbehälter bei Bodenunebenheiten etwas seitlich kippt. Zweckmäßig kann die Puffereinrichtung ein mit dem Tragrahmen des Sammelbehälters verbundenes Pufferelement aufweisen, das mit einem in Fahrtrichtung weisenden Teil in eine mit dem Fahrzeug seitlich verbundene Öse eingreift. Die Öse begrenzt die Ausweichbewegungen nach oben, unten oder zur Seite.

Schließlich kann die Klappe in ihrer den Sammelbehälter verschließenden Stellung verriegelbar sein und einen Griffteil aufweisen, der von einem Fahrersitz am Fahrzeug aus leicht erfassbar ist.

In der Zeichnung ist ein nachfolgend näher erläutertes Ausführungsbeispiel der Erfindung dargestellt. Es zeigt:
- Fig. 1: einen Kompakttraktor mit frontseitig angebautem Mähwerk und einem seitlich angeschlossenen Sammelbehälter zum Auffangen des geschnittenen Gutes in Seitenansicht,
- Fig. 2: die Anschlußvorrichtung für den Sammelbehälter in der Draufsicht, wobei der Sammelbehälter in strichpunktierten Linien angedeutet ist,
- Fig. 3: den Sammelbehälter mit Kompakttrator in Vorderansicht ohne das Mähwerk, wobei in strichpunktierten Linien die Offenstellung des Sammelbehälters angedeutet ist,
- Fig. 4: einen Schnitt nach der Linie 4 : 4 in Fig. 2,

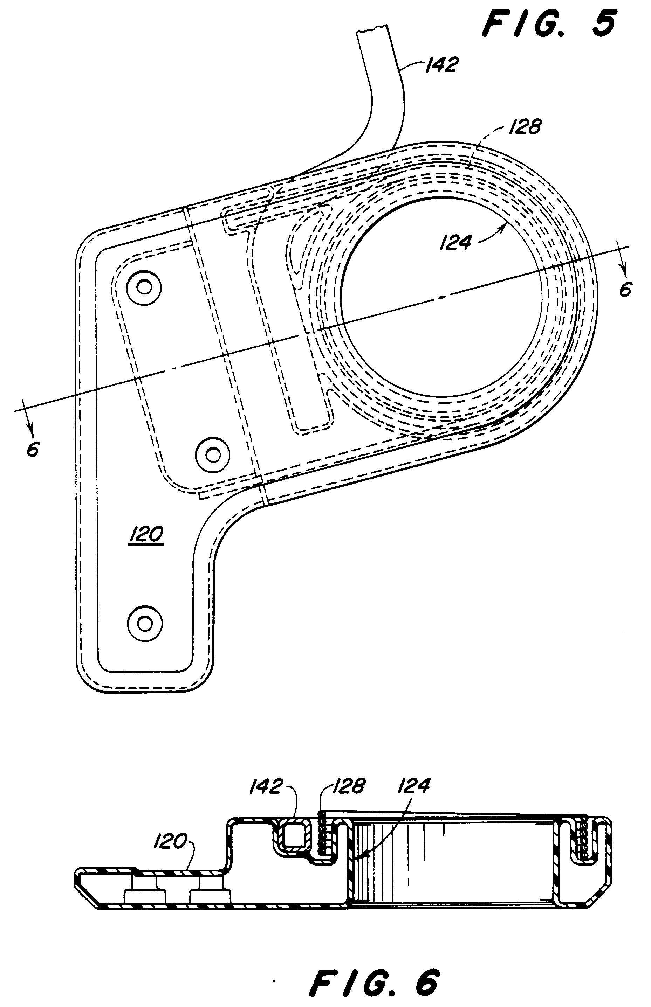

- Fig. 5: den vorderen Gelenkanschluß einer Klappe zum Entleeren des Sammelbehälters und
- Fig. 6: einen Schnitt nach der Linie 6 : 6 in Fig. 5.

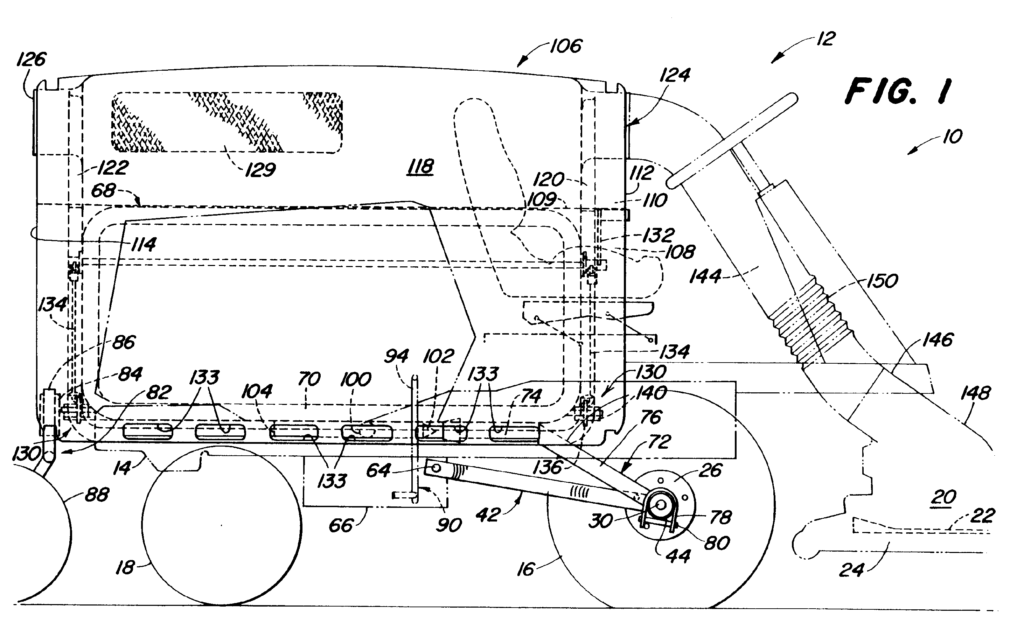

In Fig. 1 der Zeichnung ist mit 10 ein Fahrzeug in Form eines Kompakttraktors mit frontseitig angebautem Mähwerk 20 und seitlich angeschlossener Sammelbehältereinheit 12 bezeichnet. Das Fahrzeug 10 weist einen sich in Fahrtrichtung längs erstreckenden Rahmen 14 auf, der sich auf zwei vorderen angetriebenen Laufrädern 16 und zwei rückwärtigen lenkbaren Laufrädern 18 abstützt. Das Mähwerk 28 ist durch eine der Einfachheit halber nicht dargestellte Vorrichtung mit dem Fahrzeug 10 verbunden, weist in einem Mähergehäuse 24 angeordnete Sichelmesser 22 auf und fördert das geschnittene Gut durch eine Rohrvorrichtung 144 in einen Sammelbehälter 106. Die Sammelbehältereinheit 12 ist an der rechten Fahrzeugseite vorgesehen, ebenso wie die Rohrvorrichtung 144, die an die rechte Seite des Mähwerks 20 angeschlossen ist, das eine Arbeitsbreite hat, die größer ist, als die Fahrzeugbreite. Die Sammelbehältereinheit liegt jedoch innerhalb der Arbeitsbreite des Mähwerkes.

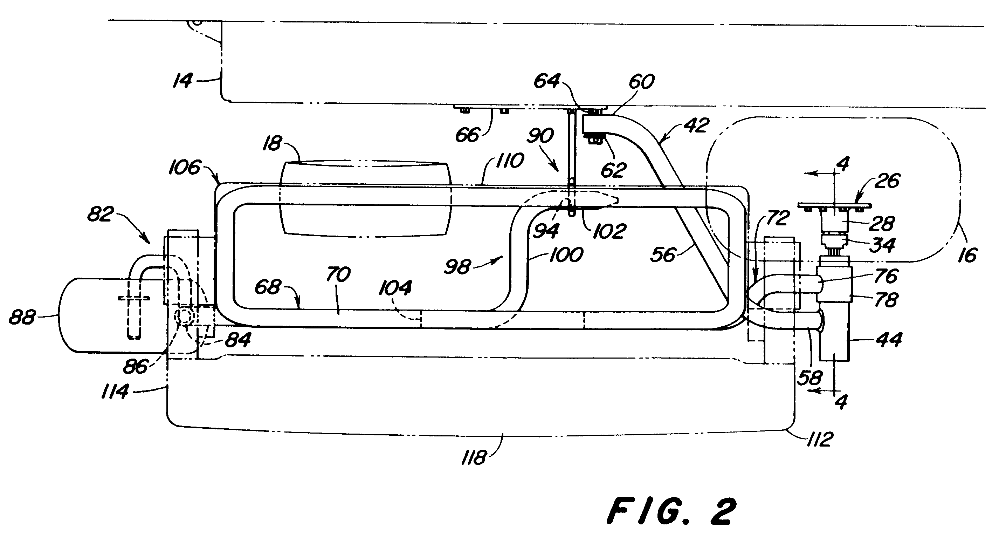

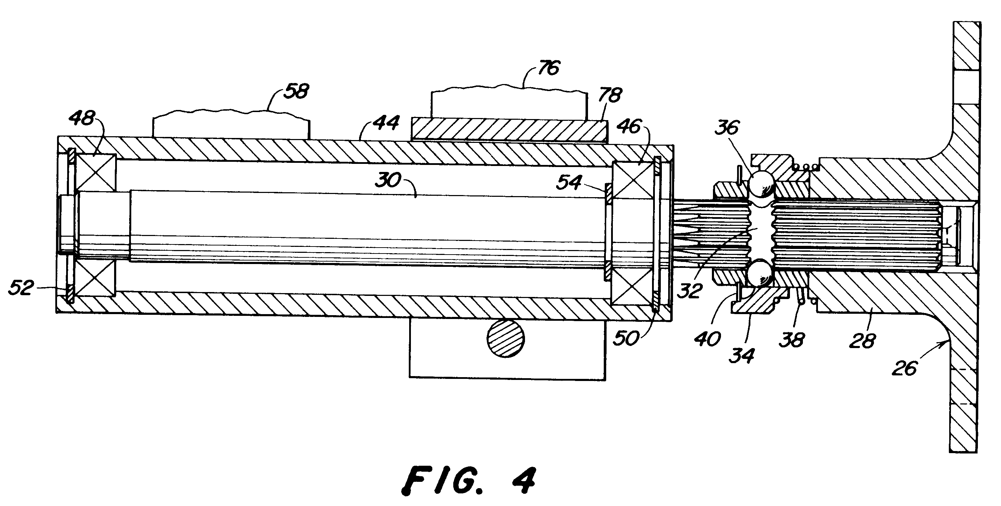

Zur Sammelbehältereinheit 12 gehört ein Anschlußteil 26, der auf die Schrauben aufsteckbar ist, die das rechte vordere Laufrad 16 mit seiner Treibachse verbinden und wird auf dem Laufrad durch dessen Radmuttern gehalten. Der Anschlußteil 26 ist scheibenartig ausgebildet und mit einem seitlich gerichteten Rohrfortsatz 28 versehen (siehe Fig. 2 und 4), der eine innere Keilverzahnung aufweist. In diesen ist das eine entsprechende äußere Keilverzahnung aufweisende Ende einer Tragwelle 30 einsteckbar. Zur Sicherung der Tragwelle 30 in dem Anschlußteil 26 ist in die Tragwelle eine Ringnut 32 eingedreht und die Befestigung erfolgt über einen auf dem Rohrfortsatz 28 verschiebbaren Hülsenring 34 und zwei Rastkugeln 36, die über den Hülsenring in der Ringnut gehalten werden. Der Hülsenring steht unter der Wirkung einer Feder 38, die bestrebt ist, den Hülsenring in seine Verschlußstellung zu verschieben, in der er gegen einen Segerring 40 anliegt. Damit kann die Tragwelle 30 leicht von dem Anschlußteil 26 abgenommen werden.

Zu der Sammelbehältereinheit 12 gehört ferner ein Versteifungsholm 42, dessen vorderes Ende durch eine sich quer erstreckende Hülse 44 gebildet ist. Die Hülse 44 nimmt über Kugellager 46 und 48 die Tragwelle 30 drehbar auf, wozu die Hülse an ihren äußeren inneren Enden zur Aufnahme der äußeren Laufringe der Kugellager abgedreht ist. Die äußeren Laufringe liegen gegen die radialen Stirnwände der Abdrehungen an und werden durch Segerringe 50 und 52 gesichert. Die Hülse 44 selbst wird mit den Kugellagern 46 und 48 auf der Tragwelle 30 durch einen Segerring 54 gehalten, der in eine Ringnut in der Tragwelle einsetzbar ist und mit Bezug auf Fig. 4 im zusammengebauten Zustand gegen die linke Seite des rechten inneren Laufrings anliegt.

Der Versteifungsholm 42 hat noch einen Teil 56, der sich von seiner Hülse 44 aus gesehen nach rückwärts und oben und zur Seite erstreckt und an die Hülse mit einem in Fahrtrichtung verlaufenden Teil 58 angeschweißt ist. Der Teil 56 endet in einem in Fahrtrichtung verlaufenden Endteil 60, der damit zu dem Teil 58 seitlich versetzt ist und höher liegt. Der Endteil 60 ist noch mit einer quer verlaufenden Hülse 62 versehen, die auf einen Zapfen 64 aufsteckbar ist. Der Zapfen 64 ist mit einer Platte 66 verschweißt, die mit der rechten Seite des Rahmens 14 verschraubbar ist. Der Versteifungsholm 42 stabilisiert damit die Tragwelle 30 und verhindert insbesondere, daß die Tragwelle 30 im Einsatz sich nach rückwärts ausbiegt.

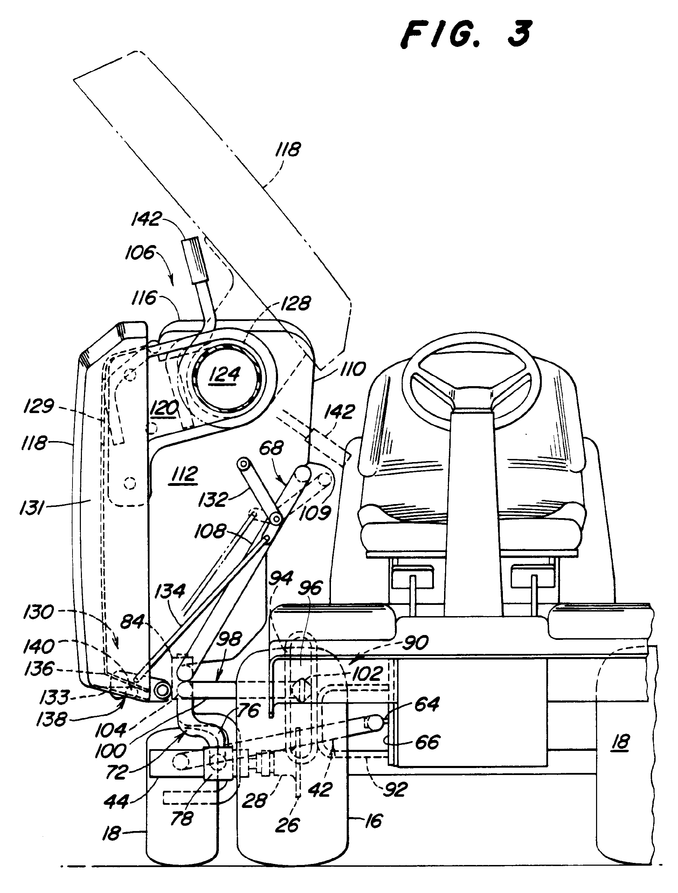

Zu der Sammelbehältereinheit 12 gehört außerdem noch ein Tragrahmen 68 für den Sammelbehälter 106 selbst, der einen mittigen Rechteckteil 70 hat, der mit Bezug auf Fig. 3 von unten links nach oben rechts geführt und damit gekippt angeordnet ist. Er hat einen vorderen Anschlußteil 72 mit einem in Fig. 1 erkennbaren horizontalen Teil 74, der mit einem vorderen Teil des Rechteckteils 70 verschweißt ist, und mit einem nach unten gerichteten Frontteil 76, der mit Bezug auf Fig. 3 nach innen versetzt und mit einem Bügelteil 78 verschweißt ist. Der Bügelteil 78 ist auf der Hülse 44 drehbar angeordnet und auf der Hülse über Schrauben 80 befestigt. Der Bügelteil kann damit auf der Hülse frei drehen und von dieser leicht abgenommen werden.

Mit dem rückwärtigen Ende des Rechteckteils 70 ist noch eine Befestigung 82 für ein Bodenrad 88, das als Pendelrad ausgebildet sein kann, verschweißt, die eine vertikal gerichtete Hülse 84 aufweist. In dieser ist eine Spindel 86 gelagert, die das Bodenrad 88 aufnimmt. Auf diese Weise ist der Tragrahmen 68 höhenverschwenkbar angeordnet und wird um seine Anschlußstelle an der Hülse 44 auf- und abschwenken, wenn das Bodenrad auf Bodenunebenheiten trifft. Die vertikalen Ausweichbewegungen werden allerdings durch eine Puffervorrichtung 90 begrenzt, zu der die Platte 66, eine innere U-förmige Stange 92 mit quer verlaufenden Schenkeln, die mit der Platte 66 verschweißt sind, und ein äußerer etwa rechteckförmig ausgebildeter Stangenteil 94 gehören, dessen lange Seiten sich vertikal erstrecken und eine in Fahrtrichtung offene Öse 96 oder Öffnung bilden. Eine innere Seite des Stangenteils 94 ist mit der Basis bzw. dem Steg der Stange 92 verschweißt.

Ein horizontales rohrförmiges Pufferelement 98 hat einen sich quer erstreckenden Zwischenteil 100 und einen sich in Fahrtrichtung erstreckenden vorderen Endteil 102, der durch die Öse 96 bzw. die Öffnung im Stangenteil 94 geführt ist. Das rückwärtige Ende 104 des Pufferelementes ist mit dem Rechteckteil 70 verschweißt. Bei Ausweichbewegungen in der Höhenrichtung aber auch zur Seite wird der Endteil 102 gegen die entsprechenden Seiten des Stangenteils 94 zur Anlage kommen. Die Schwenkbewegungen des Tragrahmens 68 um seine An- lenkstelle an der Hülse werden damit begrenzt. Ebenso seine Kippbewegungen nach innen oder außen.

Der Tragrahmen 68 dient zur Aufnahme des Sammelbehälters 106, der einen mit Bezug auf Fig. 3 von oben rechts nach unten links verlaufenden Boden 108 aufweist, der mit dem Rechteckteil 70 des Tragrahmens 68 verbunden oder in diesem eingesetzt ist. Die höher liegende Bodenkante geht bei 109 in eine innere Seitenwand 110 über und die Vorderwand des Sammelbehälters ist mit 112 und seine Rückwand mit 114 bezeichnet. Mit den Oberkanten der inneren Seitenwand 110 und der Vorder- und Rückwand 112 und 114 ist eine im wesentlichen horizontal verlaufende Oberseite 116 verbunden. Damit ist die außen liegende Seitenwand offen. Sie kann durch eine nach oben verschwenkbare Klappe 118 verschlossen werden. Zum Verschwenken dienen vordere und rückwärtige obere Schwenkarme 120, 122, die im oberen Bereich an der Klappe angreifen, wobei der vordere Schwenkarm 120 in seinem oberen inneren Teil eine zylindrische Öffnung aufweist, durch die sich ein kurzer nach vorne zeigender Rohrstutzen erstreckt, der als Einlaß 124 für das geschnittene Gut in den Sammelbehälter ausgebildet ist. Der vordere Schwenkarm 120 ist auf dem Rohrstutzen drehbar und ein ähnlicher Stutzen 126 ist für den rückwärtigen Schwenkarm 122 vorgesehen. Damit kann die Klappe 118 aus einer den Sammelbehälter verschließenden und in Fig. 3 in ausgezogenen Linien dargestellten Stellung in eine nach oben hochgeschwenkte Entleerstellung verschwenkt werden, die in Fig. 3 in strichpunktierten Linien wiedergegeben ist und in der auf Grund des schrägen Bodens das sich im Sammelbehälter befindliche Gut auf den Erdboden rutschen kann. Je eine Spiralfeder 128 ist noch für die Schwenkarme 120, 122 vorgesehen, deren eines Ende mit den Schwenkarmen und deren anderes Ende mit der Vorder- und Rückwand 112, 114 verbunden ist, die die Klappe 118 in ihrer Offenstellung halten und das Öffnen unterstützen. Die Klappe ist doppelwandig ausgebildet und die Innenwand der Klappe 118 weist einen siebartigen Luftauslaß 129 auf. Durch den Einlaß 124 in den Sammelbehälter gelangende Luft kann dann durch die doppelwandige Klappe 118 wieder austreten, indem sie zunächst über den Luftauslaß 129 in einen zwischen den beiden Klappenwänden vorhandenen Freiraum 131 eintritt und aus diesen durch Schlitze 133, die in einem unteren Teil der äußeren Wand der Klappe 118 vorgesehen sind.

Die Klappe 118 wird durch eine Verschlußvorrichtung 130 in ihrer Schließstellung gehalten. Die Verschlußvorrichtung 130 hat einen Handhebel 132, der schwenkbar an dem vorderen Bereich des Rechteckteils 70 angreift und mit dem oberen Ende einer Stange 134 verbunden ist, deren unteres Ende mit einem Riegel 136 verbunden ist, der seinerseits an der Vorderwand in deren unteren äußeren Bereich angelenkt ist. Der Riegel 136 hat eine Ausnehmung 138, die einen Stift 140 erfassen kann, der an einem unteren Teil der Klappe 118 angeordnet ist. Sobald die Klappe 118 entriegelt ist, kann sie vom Fahrerplatz des Kompakttraktors aus über einen am vorderen Schwenkarm 120 vorgesehenen Griff 142 in ihre Offenposition geschwenkt werden.

Die Rohrvorrichtung 144 verbindet einen nach rückwärts gerichteten rohrförmigen Auslaß 146 am Auswurf 148 des Mähwerks 20 mit dem Einlaß 124 am Sammelbehälter 106 und weist einen flexiblen mittigen Teil 150 auf, damit Nickbewegungen des Mähwerks und auch des Sammelbehälters ausgeglichen werden können.

Um die Sammeleinheit 12 mit dem Fahrzeug 10 verbinden zu können, muß zunächst die Platte 66, die den Zapfen 64 und die Puffervorrichtung 90 aufnimmt, mit dem Rahmen 14 des Kompakttschleppers verschraubt werden. Die Radmuttern des rechten Laufrades 16 werden abgeschraubt, der Anschlußteil 26 wird auf die Felgenschrauben aufgesetzt und die Radmuttern können wieder aufgeschraubt werden. Danach wird die Tragwelle 30 in den Rohrfortsatz 28 des Anschlußteils 26 eingesetzt, und zwar mit ihrem Ende, das die Keilverzahnung aufweist. Die Befestigung erfolgt über den Hülsenring 34, über den die Rastkugeln 36 in die Nut 32 gedrückt werden. Sodann kann der Versteifungsholm 42 montiert werden, indem die Hülse 44 zusammen mit dem Kugellager 48 auf die Tragwelle 30, auf der bereits das Kugellager 46 aufgesetzt und durch den Segerring 54 gesichert ist, aufgeschoben wird. Bei diesem Vorgang ist die Hülse 62 zu dem Zapfen 64 auszurichten, damit sie auf den Zapfen 64 rutschen kann. Die Hülse kann dann durch die Segerringe 50 und 52 gesichert werden. Der Tragrahmen 68 wird danach an die rechte Seite des Fahrzeuges 10 derart gerollt, daß der Endteil 102 in die Öse 96 eingreift und abgelassen, wobei der Bügelteil 78 die Hülse 44 erfasst. Die Sicherung des Tragrahmens erfolgt über die Schrauben 80. An das Mähergehäuse 24 wird der Auswurf 148 montiert und die Rohrverbindung 144 mit dem Auslaß 146 und dem Einlaß 124 verbunden. Wird die Sammeleinheit 12 nicht benötigt, wenn beispielsweise das Fahrzeug für andere Zwecke gegebenenfalls ohne Mähwerk eingesetzt werden soll, so brauchen lediglich die Schrauben 80 gelöst und die Rohrvorrichtung 144 abgenommen zu werden, um die Sammeleinheit 12 abziehen zu können. Der Versteifungsholm 42 kann am Fahrzeug verbleiben, da er dessen anderweitigen Einsatz nicht behindert.

Ist die Sammeleinheit 12 angeschlossen, dann läuft während der Fahrt das vordere rechte Laufrad 16 zusammen mit dem Anschlußteil 26 um. Die Tragwelle 30 rotiert in der Hülse 44 und bei der Vorwärtsfahrt wird die Sammelbehältereinheit 12 durch die Tragwelle 30 gezogen.

Das Gewicht des Tragrahmens 68 und das des Sammelbehälters 106 wird im wesentlichen von dem Bodenrad 88 aufgefangen, das rückwärtig so angeordnet ist, daß es sich hinter dem Schwerpunkt der Sammelbehältereinheit 12 befindet. Bei Beginn der Arbeit ist der Sammelbehälter 106 in der Regel leer, und geschnittenes Gut, das in den Sammelbehälter gelangt, wird gegen die Rückwand 114 des Sammelbehälters geblasen. Es baut sich von dort langsam nach vorne auf, so daß beim Befüllen der Schwerpunkt der Sammelbehältereinheit 12 von einem rückwärtigen Bereich zu einem mittigen Bereich wandert. Zumindest während des anfänglichen Befüllens übernimmt die Tragwelle und damit das Fahrzeug keinen Gewichtsanteil. Die Manövrierfähigkeit des Fahrzeuges wird nicht beeinträchtigt. Wird der Sammelbehälter voller, dann wandert die Schwerpunktslage der Sammelbehältereinheit 12 weiter nach vorne und ein Gewichtsanteil wird von der Tragwelle übernommen, wobei die Manövrierfähigkeit und Standfestigkeit des Fahrzeuges aber kaum leidet, da die Tragwelle weit vorne und relativ tief liegend angeordnet ist.

Beim Einsatz auf unebenem Boden kann der Tragrahmen 68 infolge seines Schwenkanschlusses an die Tragwelle 30 gegenüber dem Fahrzeug 10 auf- und abschwenken. Trifft das Bodenrad 88, das hinter dem rückwärtigen Laufrad 18 des Fahrzeuges liegt, auf eine Bodenerhebung, so wird es einfach über die Bodenerhebung hinwegrollen und dabei den Tragrahmen 68 unabhängig von dem Fahrzeug hochschwenken. Die Schwerpunktslage des Fahrzeuges wird dabei nicht verändert. Das durch die Öse 96 gebildete Langloch gestattet es, daß normale Bodenerhebungungen überwunden werden können, ohne daß das Pufferelement 98 an die Öse anschlägt. Enorm große Vertikalbewegungen, bei denen sich eventuell die Rohrvorrichtung 144 lösen oder verbiegen könnte, werden jedoch durch die Öse verhindert. Gleichfalls begrenzt die Öse 96 eventuelle seitliche Bewegungen der Sammelbehältereinheit 12, die beim Fahren auf unebenem Gelände auftreten können, durch Anschlagen des Endteils 102 an die Vertikalteile der Öse. Es wird dadurch verhindert, daß der Sammelbehälter 106 gegen das Fahrzeug 10 schlägt.

Die Sammelbehältereinheit 12 ist an der Seite des Fahrzeuges vorgesehen, so daß dem Fahrer beim Rückwärtsfahren die Sicht nicht versperrt ist. Andererseits ist der Sammelbehälter 106 so angeordnet, daß er sich hinter der rechten Seite der meisten auf dem Markt erhältlichen Mähwerke befindet, so daß durch dem Sammelbehälter oder seinen Tragrahmen die Breite über alles nicht erhöht oder nur unwesentlich erhöht wird. Durch den Seitenanschluß wird auch die Länge über alles nicht oder nur unwesentlich erhöht. Kurven können damit leicht durchfahren werden. Der Seitenanschluß hat auch noch den weiteren Vorteil, daß sich der Sammelbehälter relativ nah hinter dem Mähwerk befindet, so daß der Abstand zwischen Sammelbehälter und Mähwerk gering ist. Dadurch können Gebläse für den Transport des geschnittenen Gutes in den Sammelbehälter Verwendung finden, die zumindest kleiner sind als solche, die für den Heckanbau benötigt werden.

Das Entleeren des Sammelbehälters ist ebenfalls äußerst einfach. Eine auf dem Fahrzeug befindliche Bedienungsperson braucht lediglich die Klappe 118 zu entriegeln und danach an dem Griff 142 zu ziehen, damit die Klappe in ihre Offenstellung verschwenkt. Die Spiralfedern 128 unterstützen diesen Vorgang und halten die Klappe in ihrer Offenstellung, in der das geschnittene Gut infolge des schrägen Bodens 108 aus dem Sammelbehälter 106 auf den Erdboden neben dem Fahrzeug rutschen kann.

Im Ganzen gesehen kann die Sammelbehältereinheit 12 leicht an- und auch wieder abgebaut werden. Der Anbau an einem vorderen oder auch rückwärtigen nicht lenkbaren Rad ergibt einen niedrig liegenden Stützpunkt an einem bereits am Fahrzeug vorhandenen Teil. Der Seitenanschluß ermöglicht ein leichtes Anfahren des Entladeplatzes, bei dem ein umständliches Manövrieren verhindert wird.

## Patentansprüche

1. Kombination aus einem Fahrzeug (10), einem Sammelbehälter (106), insbesondere für Gras oder dergleichen, und einer Vorrichtung zum seitlichen Anschließen des sich auf dem Boden abstützenden Sammelbehälters (106) an das mit einem Mähwerk (20) sowie mit mindestens einem vorderen und mindestens einem rückwärtigen Laufrad (16, 18) ausgerüstete Fahrzeug (10) über eine am Fahrzeug (10) angeschlossene Tragwelle (30), wobei die Anschlußvorrichtung vertikale Schwenkbewegungen des Sammelbehälters (106) gegenüber dem Fahrzeug zuläßt, dadurch gekennzeichnet, daß der Sammelbehälter (106) sich auf mindestens einem Bodenrad (88) abstützt und die Tragwelle (30) an dem dem Bodenrad (88) abgelegenen Ende des Sammelbehälters (106) mit einem der Laufräder (16, 18) des Fahrzeuges (10) verbunden ist.

2. Kombination nach Anspruch 1, wobei das Fahrzeug (10) mit mindestens einem vorderen und einem rückwärtigen Laufrad (16, 18) ausgerüstet ist, dadurch gekennzeichnet, daß das Bodenrad (88) im Bereich des rückwärtigen Endes des Sammelbehälters (106) vorgesehen und die Tragwelle (30) mit einem der vorderen Laufräder (16) des Fahrzeuges (10) verbunden ist.

3. Kombination nach Anspruch 1, wobei das Mähwerk (20) frontseitig am Fahrzeug (10) angebaut ist und das Mähwerk zumindest an einer Seite über die Fahrzeugbreite übersteht, dadurch gekennzeichnet, daß der Sammelbehälter (106) derart mit dem Fahrzeug (10) seitlich verbunden ist, daß er mit seiner Außenseite innerhalb der Arbeitsbreite des Mähwerks (20) liegt.

4. Kombination nach einem oder mehreren der vorherigen Ansprüche, dadurch gekennzeichnet, daß der Boden (108) des Sammelbehälters (106) von seiner dem Fahrzeug (10) zugelegenen inneren Seitenwand (110) sich schräg nach außen und unten erstreckt und die äußere Seitenwand als sich nach oben öffnende Klappen (118) ausgebildet ist.

5. Kombination nach Anspruch 2, dadurch gekennzeichnet, daß mit der Nabe eines der vorderen Laufräder (16) des Fahrzeuges (10) ein Anschlußteil (26) mit einem Rohrfortsatz (28) verbindbar ist, in den die Tragwelle (30) drehfest einsteckbar und sicherbar ist.

6. Kombination nach Anspruch 2, dadurch gekennzeichnet, daß ein Versteifungsholm (42) mit seinem rückwärtigen Ende mit dem Fahrzeug (10) verbunden ist und an seinem vorderen Ende eine auf der Tragwelle (30) gelagerte Hülse (44) aufweist.

7. Kombination nach den Ansprüchen 1, 2 und 6, dadurch gekennzeichnet, daß der Sammelbehälter (106) auf einem Tragrahmen (68) angeordnet ist, dessen vorderes Ende einen mit der Hülse (44) lösbar verbundenen und auf der Hülse (44) drehbar angeordneten Bügelteil (78) aufweist.

8. Kombination nach einem oder mehreren der vorherigen Ansprüche, dadurch gekennzeichnet, daß eine Puffereinrichtung zwischen dem Fahrzeug (10) und dem Sammelbehälter (106) derart gekuppelt ist, daß die Höhenverschwenkung und/oder seitliche Ausweichbewegungen des Sammelbehälters (106) begrenzt sind.

9. Kombination nach Anspruch 8, dadurch gekennzeichnet, daß die Puffereinrichtung ein mit dem Tragrahmen (68) des Sammelbehälters (106) verbundenes Pufferelement (98) aufweist, das mit einem in Fahrtrichtung weisenden Teil (102) in eine mit dem Fahrzeug (10) seitlich verbundene Öse (96) eingreift.

10. Kombination nach Anspruch 4, dadurch gekennzeichnet, daß die Klappe (118) in ihrer den Sammelbehälter (106) verschließenden Stellung verriegelbar ist und einen Griffteil (142) aufweist, der von einem Fahrersitz am Fahrzeug (10) aus leicht erfassbar ist.

## Claims

1. A combination of a vehicle (10), a collecting container (106), especially for grass or the like, and a device for latterally mounting the collecting container (106) supported on the ground on the vehicle (10) equipped with a mowing mechanism (20) and at least one front and at least one rear running wheel (16, 18), through a support shaft (30) connected to the vehicle (10), wherein the mounting device allows vertical swinging movements of the collecting container (106) relative to the vehicle, characterized in that the collecting container (106) is supported on at least one ground wheel (88) and the support shaft (30) is connected to one of the running wheels (16, 18) of the vehicle (10) at the end of the collecting container (106) remote from the ground wheel (88).

2. A combination according to claim 1, wherein the vehicle (10) is equipped with at least one front and one rear running wheel (16, 18), characterized in that the ground wheel (88) is provided in the region of the rear end of the collecting container (106) and the support shaft (30) is connected to one of the front running wheels (16) of the vehicle (10).

3. A combination according to claim 1, wherein the mowing mechanism (20) is mounted on the front of the vehicle (10) and the mowing mechanism projects on at least one side beyond the width of the vehicle, characterized in that the collecting container (106) is so attached to the side of the vehicle (10) that its outer side lies within the working width of the mowing mechanism (20).

4. A combination according to one or more of the preceding claims, characterized in that the bottom (108) of the collecting container (106) extends obliquely out and downwards from its inner sidewall (110) adjacent the vehicle (10) and the outer sidewall is formed as an upwardly opening flap (118).

5. A combination according to claim 2, characterized in that a connector piece (26) with a tubular extension (28), in which the support shaft (30) can be non rotatably inserted and secured, can be connected to the hub of one of the front running wheels (16) of the vehicle (10),

6. A combination according to claim 2, characterized in that a stiffening beam (42) is connected at its rear end to the vehicle (10) and at its front end comprises a sleeve (44) forming a bearing on the support shaft (30).

7. A combination according to claims 1, 2 and 6, characterized in that the collecting container (106) is arranged on a support frame (68), whose front end comprises a stirrup part (78) releasably attached to the sleeve (44) and rotatably arranged on the sleeve (44).

8. A combination according to one or more of the preceding claims, characterized in that a damping device is so coupled between the vehicle (10) and the collecting container (106) that the swinging up and/or lateral deviations of the collecting container (106) are limited.

9. A combination according to claim 8, characterized in that the damping device comprises a damping element (98) connected to the support frame (68) of the collecting container (106) and which engages by means of a part (102) facing in the direction of travel in an eye (96) connected to the side of the vehicle (10).

10. A combination according to claim 4, characterized in that the flap (118) can be locked in its position closing the collecting container (106) and has a handle part (142) which can easily be grasped from a driving seat on the vehicle (10).

## Revendications

1. Combinaison d'un véhicule (10), d'un récipient collecteur (106), notamment pour de l'herbe ou analogue, et d'un dispositif pour le raccordement latéral, au moyen d'un arbre porteur (30) raccordé au véhicule (10), du récipient collecteur (106), qui s'appuie sur le sol, au véhicule (10) qui est équipé d'une tondeuse (20) ainsi que d'au moins une roue mobile avant (16) et au moins une roue mobile arrière (18), le dispositif de raccordement autorisant des mouvements de pivotement verticaux du récipient collecteur (106) par rapport au véhicule, **caractérisée** en ce que le récipient collecteur (106) s'appuie sur au moins une roue au sol (88) et l'arbre porteur (30) est relié, à l'extrémité du récipient collecteur (106) opposée à la roue au sol (88), à une des roues mobiles (16, 18) du véhicule (10).

2. Combinaison selon la revendication 1, le véhicule (10) étant équipé d'au moins une roue mobile avant et d'une roue mobile arrière (16, 18), **caractérisée** en ce que la roue au sol (88) est prévue dans la région de l'extrémité arrière du récipient collecteur (106) et l'arbre porteur (30) est relié à une des roues mobiles avant (16) du véhicule (10).

3. Combinaison selon la revendication 1, la tondeuse (20) étant montée à l'avant du véhicule (10) et dépassant de la largeur du véhicule au moins d'un côté, **caractérisée** en ce que le récipient collecteur (106) est raccordé latéralement au véhicule (10) de telle sorte que son côté extérieur se situe à l'intérieur de la largeur de travail de la tondeuse (20).

4. Combinaison selon une ou plusieurs des revendications précédentes, **caractérisée** en ce que le fond (108) du récipient collecteur (106) s'étend en inclinaison vers l'extérieur et le bas depuis sa paroi latérale intérieure (110) proche du véhicule (10), et la paroi latérale extérieure est réalisée sous la forme d'un volet (118) s'ouvrant vers le haut.

5. Combinaison selon la revendication 2, **caractérisée** en ce qu'une pièce de raccordement (26), pourvue d'un prolongement tubulaire (28) dans lequel l'arbre porteur (30) peut être emboîté et bloqué en solidarité de rotation, peut être assemblée au moyeu d'une des roues mobiles avant (16) du véhicule (10).

6. Combinaison selon la revendication 2, **caractérisée** en ce qu'un longeron de renforcement (42) est assemblé au véhicule (10) par son extrémité arrière et présente, à son extrémité avant, un manchon (44) monté sur l'arbre porteur (30).

7. Combinaison selon les revendications 1, 2 et 6, **caractérisée** en ce que le récipient collecteur (106) est disposé sur un châssis porteur (68), dont l'extrémité avant présente une partie en étrier (78) montée a rotation sur le manchon (44) en lui étant assemblée de façon amovible.

8. Combinaison selon une ou plusieurs des revendications précédentes, **caractérisée** en ce qu'un dispositif de tamponnement est accouplé entre le véhicule (10) et le récipient collecteur (106) de telle sorte que le pivotement vertical et/ou les écarts latéraux du récipient collecteur (106) sont limités.

9. Combinaison selon la revendication 8, **caractérisée** en ce que le dispositif de tamponnement présente un élément de tamponnement (98), qui est assemblé au châssis porteur (68) du récipient collecteur (106) et s'engage, par une partie (102) s'étendant dans la direction de marche, dans un oeillet (96) assemblé latéralement au véhicule (10).

10. Combinaison selon la revendication 4, **caractérisée** en ce que le volet (118) peut être verrouillé dans sa position fermant le récipient collecteur (106) et présente une poignée (142), qui peut être facilement saisie à partir d'un siège de conduite prévu sur le véhicule (10).
